# EUROPEAN PATENT APPLICATION

(11) **EP 3 974 974 A1**
(43) Date of publication of application: **30.03.2022**
(21) Application number: 20862292.8
(22) Date of filing: 01.09.2020
(51) Int. Cl.: G06F 9/455

(54) **VIRTUALIZATION METHOD AND SYSTEM FOR PERSISTENT MEMORY**

(30) Priority: 10.09.2019 CN 201910852757
(71) Applicant: ZTE Corporation, Shenzhen, Guangdong 518057 (CN)
(72) Inventor: CHEN, Zhenghua, Shenzhen, Guangdong 518057 (CN); TU, Yaofeng, Shenzhen, Guangdong 518057 (CN); XU, Junning, Shenzhen, Guangdong 518057 (CN); GUO, Bin, Shenzhen, Guangdong 518057 (CN); HAN, Yinjun, Shenzhen, Guangdong 518057 (CN); GAO, Hong, Shenzhen, Guangdong 518057 (CN)
(74) Representative: Zoli, Filippo
(86) International application number: PCT/CN2020/112879
(87) International publication number: WO 2021/047425

(57) **Abstract**

A virtualization method for a persistent memory comprises: allocating a storage space to a virtual persistent memory of a virtual machine on the basis of a physical persistent memory, a non-volatile memory and a volatile memory, wherein the non-volatile memory provides the physical persistent memory with an expanded storage space, and the volatile memory provides the physical persistent memory and the non-volatile memory with a data buffer space.

## Description

### CROSS-REFERENCE TO RELATED APPLICATION

This application is based on and claims priority to Chinese Patent Application No. 201910852757.6 filed on September 10, 2019, which is incorporated herein for reference in its entirety.

### TECHNICAL FIELD

Embodiment of the present application relates to, without limitation, the technical field of memory virtualization, and more particularly, to a virtualization method and a system of Persistent Memory (PM).

### BACKGROUND

With the technological development of non-volatile memory media, Persistent Memory (PM) is becoming increasingly mature and available for practical commercial applications. The PM offers performance similar to that of Dynamic Random Access Memory (DRAM) with the addition of persistence, making it an ideal device for applications such as high-load databases.

At the same time, cloudization of services is also the general trend, and better flexibility can be achieved by deploying services in a cloud environment. In the cloud environment, the underlying hardware is virtualized and shared across a plurality of services. Memory devices typically adopt the Thin Provisioning (TP) technology, which allocates memory space from a physical device when actually writing data in a virtual device and reclaims the physical memory space after the data are deleted. Because traditional memory devices such as disks have large physical memory capacity, the TP technology can achieve better dynamic allocation and over-allocation, i.e., the total virtual memory capacity for all users is greater than the physical memory capacity. Efficient allocation of idle memory resources among a plurality of virtual devices can avoid space wasting while meeting users' peak memory demand.

However, the relatively small capacity and high cost of existing single PM devices and the limitations on the number of system memory slots all constrain the expansion of the number of single PM devices, resulting in poor PM virtualization effect in the cloud environment. The above scenarios may be prone to problems such as performance fluctuations and run out of physical memory space, as well as poor results with the TP technology due to the limited physical memory resources available for dynamic allocation.

### SUMMARY

According to the present application, a method and a system for virtualizing Persistent Memory (PM) are provided, which can virtualize large-capacity PM.

In an aspect, a virtualization method of Persistent Memory (PM) is provided according to the present application, including: allocating a memory space to a virtual PM of a Virtual Machine (VM) based on a physical PM, a Non-Volatile Memory (NVM) and a volatile memory, where the NVM is configured to provide an extended memory space for the physical PM, and the volatile memory is configured to provide data caching space for the physical PM and the NVM.

In another aspect, a virtualization system of Persistent Memory (PM) is provided according to the present application, including a physical host, physical PM, Non-Volatile Memory (NVM) and volatile memory, where a Virtual Machine Monitor (VMM) creating and operating Virtual Machine (VM) on the physical host is run on the physical host, the VMM allocates memory space to virtual PM of the VMs based on the physical PM, the NVM and the volatile memory, the NVM is configured to provide an extended memory space for the physical PM, and the volatile memory is configured to provide a data caching space for the physical PM and the NVM.

In another aspect, a computer-readable storage medium storing a computer program is provided according to the present application, where the computer program, when executed, performs the steps of the virtualization method.

Other features and advantages of the present application will be described in the following description, and partly become apparent from the description or shall be understood by implementing the present application. The purposes and other advantages of the present application can be realized and obtained through the structures specifically specified in the specification, claims and drawings.

### BRIEF DESCRIPTION OF DRAWINGS

The accompanying drawings are used to provide further understanding of technical schemes of the present application, and constitute part of the specification. The accompanying drawings are used to, together with the embodiments of the present application, describe the technical schemes of the present application, and do not constitute any limitation to the technical schemes of the present application.
FIG. 1 is an example diagram of a virtualization system of Persistent Memory (PM) according to an embodiment of the present application;
FIG. 2 is a schematic structural diagram of a metadata mapping table according to an embodiment of the present application;
FIG. 3 is a flow chart of a virtualization method of Persistent Memory (PM) according to an embodiment of the present application;
FIG. 4 is a flow chart of a first read/write operation of virtual PM according to an embodiment of the present application;
FIG. 5 is a flow chart of a write operation of the virtual PM according to an embodiment of the present application;
FIG. 6 is a flow chart of a read operation of the virtual PM according to an embodiment of the present application; and
FIG. 7 is a flow chart of reclaiming a physical memory space mapped by the virtual PM according to an embodiment of the present application.

### DETAILED DESCRIPTION

In order to make the objective, technical schemes and advantages of the present application clearer, embodiments of the present application will be described in detail below with reference to the accompanying drawings. It should be noted that the embodiments of the present application and the features in the embodiments may be randomly combined with each other in the case of no conflict.

Steps illustrated in the flow charts of the accompanying drawings may be implemented in computer systems such as a set of computer-executable instructions. Furthermore, although the logical orders are illustrated in the flow charts, in some cases, the steps shown or described may be implemented in different orders than those herein.

According to embodiments of the present application, a virtualization method and a system of Persistent Memory (PM) are provided. With combined use of physical PM, Non-Volatile Memory (NVM) and volatile memory, large-capacity PM is virtualized, so that the memory capacity of virtual PM is no longer restricted by that of the physical PM, and the performance index of the virtual PM can be kept higher than or close to that of the physical PM, which better meets the demand for the multi-tenant scenario in a cloud environment.

According to an embodiment of the present application, a virtualization system of Persistent Memory (PM) is provided, including a physical host, a physical PM, a NVM and a volatile memory. A Virtual Machine Monitor (VMM) creating and operating Virtual Machine (VM) on the physical host is run on the physical host. The VMM allocates memory space to virtual PM of the VMs based on the physical PM, the NVM and the volatile memory, where the NVM is configured to provide an extended memory space for the physical PM, and the volatile memory is configured to provide a data caching space for the physical PM and the NVM.

In an embodiment, the volatile memory may include Dynamic Random Access Memory (DRAM) and the NVM may include a Solid State Drive (SSD), which, however, will not be limited in the present application. In other embodiments, other volatile memories and NVMs may be adopted. It should be noted that the performance of the selected volatile memory should be higher than that of the physical PM.

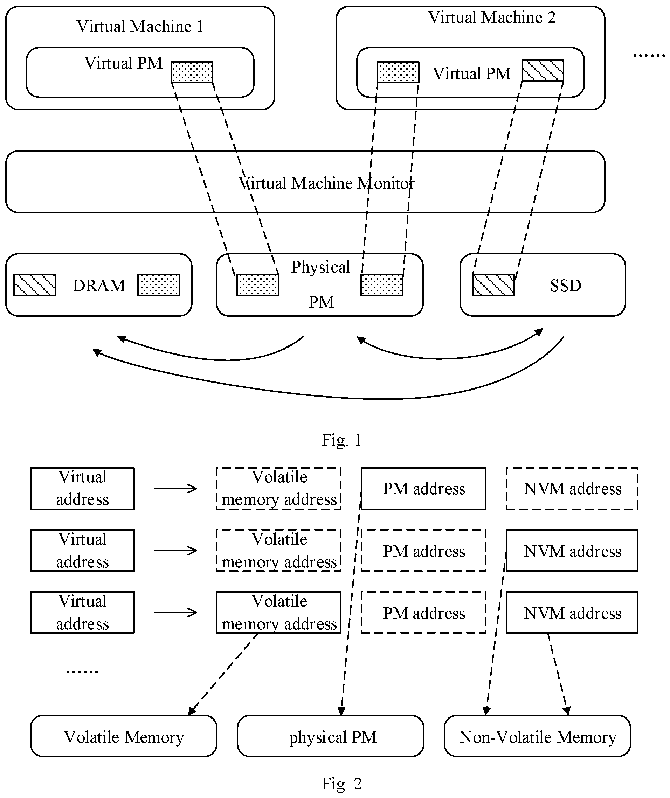

FIG. 1 is an example diagram of the virtualization system of Persistent Memory (PM) according to the embodiment of the present application. In this embodiment, the DRAM is described by taking DRAM as an example and the NVM is described by taking SSD as an example. The VMM (also known as Hypervisor) is a software layer running between the physical host and the VMs (such as a VM 1 and a VM 2). The VMM may provide a virtual operating platform for the VMs based on hardware resources of the physical host and manage the operation of the VMs. Different VMs operate independently and share all the hardware resources of the physical host.

As shown in FIG. 1, when the VM 1 accesses a certain memory region in the virtual PM for the first time, the VMM (Hypervisor) dynamically allocates corresponding memory space to the physical PM, and maps read and write requests to the physical PM. When the VMM allocates memory space only based on the physical PM, allocation fails after the memory capacity of the physical PM runs out. Due to the small memory capacity of an existing physical PM, the allocation fails easily, making it difficult to meet the demand for multi-tenant sharing in the cloud environment.

In this embodiment, as shown in FIG. 1, the VMM enables virtualization so that the virtual PM in the VMs can be mapped to the physical PM, the SSD and the DRAM.

In this embodiment, the SSD, as a NVM, can replenish the memory capacity of the physical PM to provide an extended memory space for the physical PM. For example, in case of insufficient memory capacity of the physical PM, Not Recently Used (NRU) data stored in the physical PM may be automatically migrated to the SSD, thus effectively expanding the capacity of the physical PM and maintaining the nonvolatile characteristics of the data.

In an example, as shown in FIG. 1, when there may be a need to allocate a memory region by the VM 2, the VMM maps in the physical PM, and can monitor the available memory capacity of the physical PM and the access characteristics of the data stored therein (the access characteristics may include, for example, access times, time intervals, read/write ratio, and I/O continuity), and then migrate Least Frequently Used (LFU) data to the SSD according to the demand, so as to expand the memory capacity of the physical PM. Since the SSD is NVM, the migration of data will not affect the nonvolatile characteristics of the virtual PM.

In this embodiment, DRAM, as a volatile memory, may serve as a cache of the physical PM and the SSD to provide data caching space for the physical PM and the SSD, thereby improving the performance. The physical PM may include Phase-Change Memory (PCM), Resistive Random-Access Memory (ReRAM or RRAM) and other memory media, and some physical PM still lags far behind the DRAM in terms of the read-write performance. Therefore, by caching data in the DRAM, the read performance can be higher than that of the physical PM. In addition, Data read more frequently than written may be stored in the DRAM and the SSD to reduce the number of times of migrating data between the physical PM and the SSD, so as to alleviate performance fluctuations.

In an example, through the identification of hotspot data, the hotspot data stored in the physical PM may be cached in the DRAM, thus making the read performance higher than that of the physical PM. The data stored in the SSD may also be cached in the DRAM according to the demand to make up for the performance gap between the physical PM and the SSD. With combined use of the DRAM and the SSD, the performance fluctuations caused by insufficient remaining memory space of the physical PM can be effectively reduced. The hotspot data may be identified based on the access characteristics thereof. For example, the access characteristics are analyzed using algorithms such as Least Recently Used (LRU), Least Frequently Used (LFU) or a combination thereof to identify hotspot data.

In this embodiment, the DRAM may be configured to cache a metadata mapping table of the virtual PM in addition to caching the hotspot data directly. In order to realize the dynamic allocation of physical memory regions, the VMM (Hypervisor) may maintain a mapping table (i.e., the metadata mapping table) from virtual addresses to physical addresses. When the VMs access the virtual PM, the VMM may search an actual physical memory location in the metadata mapping table, and then perform corresponding read and write operations.

In this embodiment, in addition to being cached in the DRAM, the metadata mapping table may be persisted in the physical PM, so that the virtual PM is restored to its previous state after the VMM (Hypervisor) is restarted. For performance optimization, it is possible to completely save the metadata mapping table in the DRAM and simply synchronize the modifications to a copy of the metadata mapping table in the physical PM in real time when updating the metadata mapping table. In this way, the access latency of the virtual PM can be effectively shortened.

In an embodiment, the VMM may search the actual memory location in the metadata mapping table based on the virtual addresses in the read and write requests from the VMs, i.e., a volatile memory address, a PM address and an NVM address (such as an SSD address). FIG. 2 is a schematic structural diagram of the metadata mapping table according to an embodiment of the present application. As shown in FIG. 2, each entry of the metadata mapping table contains four pieces of key information, namely the virtual addresses and the physical addresses mapped from the virtual addresses. The physical addresses may include a volatile memory address, a PM address and an NVM address.

Depending on the access characteristics of the data, the above three physical addresses mapped from any virtual address are not always valid. In any case, the PM address or the NVM address mapped from any virtual address is valid, thus ensuring the data persistence. In some examples, the volatile memory address mapped from the virtual address for storing hotspot data may also be valid, thus allowing accelerated access.

In an example, during the write operation of the virtual PM of the VMs, the VMM writes data in the physical PM. if the PM address mapped from the virtual address is invalid, the write operation is performed after the memory space of the physical PM is allocated to the virtual PM. In this case, if the volatile memory address or the NVM address mapped from the virtual address is valid, the volatile memory address or the NVM address mapped from the virtual address will be marked as invalid to release the corresponding memory space.

In an example, during the read operation of the virtual PM of the VMs, the VMM search a first valid physical address mapped from the virtual address in the metadata mapping table in an order of the volatile memory address, the PM address and the SSD address, and then perform the actual read operation after the first valid physical address is found.

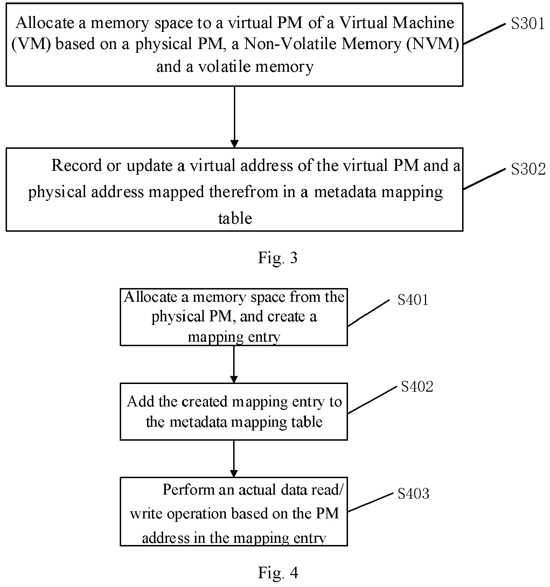

FIG. 3 is a flow chart of a virtualization method of Persistent Memory (PM) according to an embodiment of the present application. As shown in FIG. 3, the virtualization method according to this embodiment includes the following steps of S301 and S302.

At S301, memory space is allocated to a virtual PM of a Virtual Machine (VM) based on a physical PM, a Non-Volatile Memory (NVM) and a volatile memory, where the NVM is configured to provide an extended memory space for the physical PM, and the volatile memory is configured to provide a data caching space for the physical PM and the NVM.

In an embodiment, the volatile memory may include a Dynamic Random Access Memory (DRAM) and the NVM may include a Solid State Drive (SSD), which, however, will not be limited in the present application. In other embodiments, other volatile memories and NVMs may also be adopted. It should be noted that the performance of the selected volatile memory should be higher than that of the physical PM.

In an embodiment, the step in which memory space is allocated to virtual PM of Virtual Machine (VM) may include allocating memory space of the NVM to the virtual PM.

According to this embodiment, the method may further include migrating data, which are stored in the physical PM and whose access characteristics meet a second condition, to memory space mapped by the virtual PM in the NVM in case that an available memory capacity of the physical PM mapped by the virtual PM meets a first condition.

In some examples, the first condition may include that the available memory capacity of the physical PM is less than or equal to a capacity threshold. The second condition may include that the access frequency within a set time interval is less than or equal to a first threshold, which, however, will not be limited in the present application. The first and second conditions may be adjusted according to the actual demand.

In an embodiment, the step in which memory space is allocated to virtual PM of Virtual Machine (VM) may include allocating memory space of the volatile memory to the virtual PM.

According to this embodiment, the method may further include: identifying data, whose access characteristics meet a third condition, from data stored in the physical PM or the NVM mapped by the virtual PM, and caching the data, whose access characteristics meet the third condition, in the memory space mapped by the virtual PM in the volatile memory.

In some examples, the third condition may include that the access frequency within the set time interval is greater than or equal to a second threshold, which, however, will not be limited in the present application. The third condition may be adjusted according to the actual demand.

In an embodiment, after S301, the method according to this embodiment may further include a step of S302.

At S302, virtual addresses and physical addresses mapped therefrom of the virtual PM are recorded or updated in a metadata mapping table, where the physical addresses include a volatile memory address, an NVM address and a PM address. In an embodiment, the metadata mapping table may be cached in the memory space mapped by the virtual PM in the volatile memory, and a copy of the metadata mapping table is stored in the memory space mapped by the virtual PM in the physical PM.

In an embodiment, the method according to this embodiment further includes at least one of:
searching, based on the virtual address accessed by a read request from the VM, a first valid physical address mapped from the virtual address in the metadata mapping table in an order of the volatile memory address, the PM address to the NVM address, and reading data from the found first valid physical address mapped from the virtual address; or
searching the PM address mapped from the virtual address in the metadata mapping table to determine whether the address is valid or not based on the virtual address accessed by a write request from the VM; when the PM address mapped from the virtual address in the metadata mapping table is valid, writing data to be written in the valid PM address mapped from the virtual address; and when the PM address mapped from the virtual address in the metadata mapping table is invalid, allocating the memory space of the physical PM, updating the valid PM address mapped from the virtual address in the metadata mapping table, and writing the data to be written in the updated PM address mapped from the virtual address.

In an embodiment, the method according to this embodiment further includes: reclaiming and reallocating memory space of a physical memory medium based on the available memory capacity of the physical memory medium mapped by the virtual PM and the access characteristics of data, where the physical memory medium includes at least one of the physical PM, the NVM or the volatile memory. A reclaim policy of the memory space of the physical memory medium may be determined according to the actual demand, which will not be limited in the present application. For example, in case of insufficient memory space of the physical PM, the memory space may be reclaimed to migrate LFU data in the physical PM to the NVM. For example, data in volatile memory (such as DRAM) may be eliminated by algorithms such as LRU. Since copies of data are stored in the physical PM or the NVM, data stored in the volatile memory may be directly discarded when reclaiming the memory space of the volatile memory. For example, LFU data in the DRAM may be periodically deleted to reclaim the memory space of the DRAM.

The virtualization method according to the embodiment of the present application will be described by taking the management of the metadata mapping table, data writing and reading and cache data management as examples.

In an embodiment, the metadata mapping table may persistently save mapping relations between virtual addresses and physical addresses, so as to recover the VM after the physical host is restarted, and the metadata mapping table will be frequently queried during data read and write operations.

Based on this, in this embodiment, the metadata mapping table is stored in both the DRAM and the physical PM based on the following rules: the metadata mapping table is stored in the DRAM, with its copy stored in the physical PM at the same time, so as to ensure the persistence. During the read operation of the metadata mapping table, metadata are read directly from the DRAM without accessing the physical PM. During the write operation of the metadata mapping table, data are first written to the DRAM, and corresponding modification are updated in the physical PM. When restarting the VMM (Hypervisor), all data entries are loaded into the DRAM from the physical PM to complete the startup process.

It should be noted that problems such as pre-allocation of memory space and the consistency of write operations in the DRAM and the physical PM for the metadata mapping table can be handled by method commonly used by those having skill in the art, and thus will not be repeated herein.

In an embodiment, during the first access (read or write) operation of data in the virtual PM, the VMM first may allocate physical memory space and modify the metadata mapping table. FIG. 4 is a flow chart of a first read/write operation of the virtual PM according to an embodiment of the present application. As shown in FIG. 4, upon receipt of a first request from the VM to access the data in the virtual PM, the VMM can perform following steps of S401, S402 and S403.

At S401, memory space is allocated from the physical PM, and a mapping entry is created based on the virtual addresses and the PM addresses, where the volatile memory address and the NVM address mapped by the virtual addresses are set to be invalid, i.e., no corresponding memory space is allocated.

At S402, the created mapping entry is added to the metadata mapping table.

At S403, actual data read/write operations are performed based on the PM addresses in the mapping entry.

It should be noted that newly created data entries are read and written through the PM address, and may subsequently be copied or migrated between the physical PM, the NVM (such as SSD) and the volatile memory (such as DRAM) based on the statistics of access characteristics, and the corresponding read and write operations will be affected.

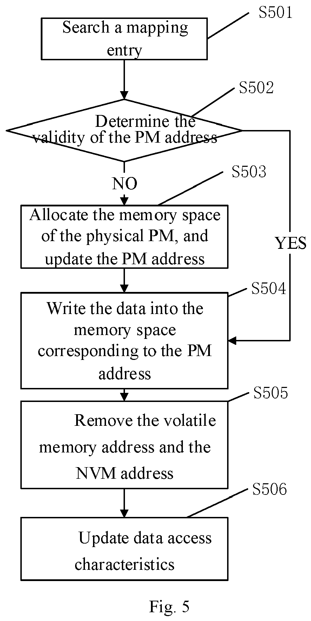

FIG. 5 is a flow chart of a write operation of the virtual PM according to an embodiment of the present application. In this embodiment, a flow process of the data write operation based on the mapping entries existing in the metadata mapping table of the virtual PM is described. As shown in FIG. 5, the VMM performs the following steps of S501, S502, S503, S504, S505 and S506.

At S501, the metadata mapping table is accessed to obtain a mapping entry of the virtual address corresponding to a write operation request.

At S502, based on the mapping entry found, the validity of the PM address in the mapping entry is determined. If the PM address is valid, a step of S504 is performed. If the PM address is invalid, a step of S503 is performed.

At S503, the memory space of the physical PM is allocated to the virtual address, and the PM address mapped from the virtual address is updated.

At S504, the data are written into the memory space corresponding to the valid PM address mapped from the virtual address.

At S505, the volatile memory address and the NVM address mapped from the virtual address, if valid, are removed to release the corresponding memory space.

At S506, the data access characteristics, such as the total access times corresponding to the data, are updated.

It should be noted that write operations are performed in the physical PM to ensure performance and data persistence.

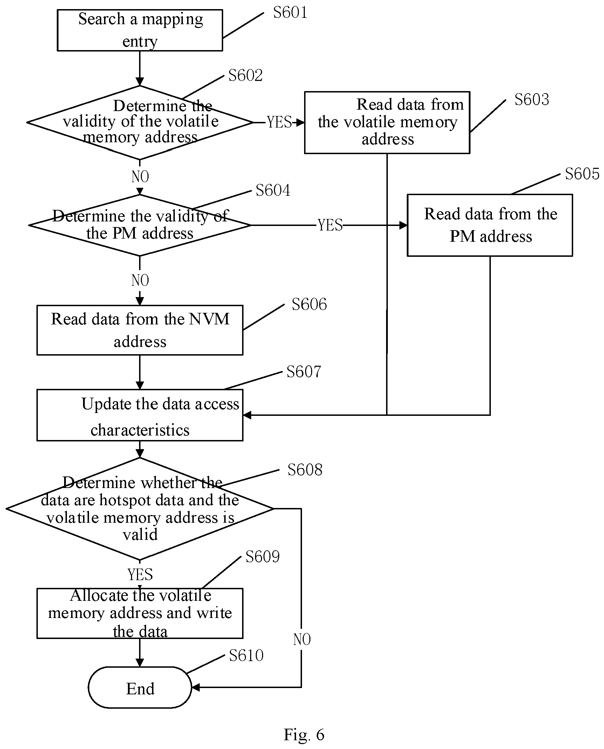

FIG. 6 is a flow chart of a read operation of the virtual PM according to an embodiment of the present application. In this embodiment, a flow process of the data read operation based on the mapping entries existing in the metadata mapping table of the virtual PM is described. As shown in FIG. 6, the VMM performs following steps of S601, S602, S603, S604, S605, S606, S607, S608, S609 and S610.

At S601, the metadata mapping table is accessed to obtain a mapping entry of the virtual address corresponding to a read operation request.

At S602, based on the mapping entry found, the validity of the volatile memory address in the mapping entry is determined. If the volatile memory address is valid, a step of S603 is performed. If the invalid volatile memory address is invalid, a step of S604 is performed.

At S603, data are read from the memory space corresponding to the volatile memory address, and a step of S607 is performed.

At S604, the validity of the PM address in the mapping entry is determined. If the PM address is valid, a step of S605 is performed. If the PM address is invalid, a step of S606 is performed.

At S605, data are read from the memory space corresponding to the PM address, and the step of S607 is performed.

At S606, data are read from the memory space corresponding to the NVM address in the mapping entry.

At S607, the data access characteristics, such as the total access and read times corresponding to the data, are updated.

At S608, whether the data are hotspot data is determined based on the access characteristics. If the data read is hotspot data and the volatile memory address in the mapping entry is invalid, a step of S609 is performed. If the data read is not hotspot data or the volatile memory address in the mapping entry is valid, a step of S610 is performed.

At S609, the volatile memory address is allocated to the virtual address, and the data are copied to the volatile memory (such as DRAM) as a read cache for subsequent access.

At S610, the read data read are returned to the VM, and the process ends.

In this embodiment, during the read operation, the data are searched in an order of volatile memory (such as DRAM), physical PM and NVM (such as SSD), and read from the memory space corresponding to the first valid physical address. After the end of the data read operation, whether the data may be loaded into the volatile memory as hotspot data are determined based on the access characteristics of the data.

The hotspot data may be identified based on the access characteristics of the data. For example, the access times, time intervals, read/write ratio, input/output (IO) continuity and other characteristics are analyzed by algorithms such as LRU and LFU or a combination thereof to identify the hotspot data.

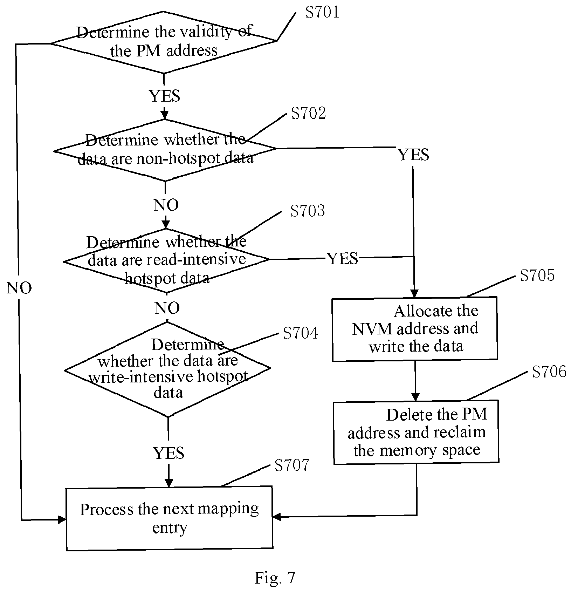

FIG. 7 is a flow chart of reclaiming physical memory space mapped by the virtual PM according to an embodiment of the present application. In this embodiment, a flow process of reclaiming the memory space in case of insufficient idle memory space of the physical PM or the volatile memory (such as DRAM) is described, e.g., the data in the physical PM or the volatile memory are migrated to the NVM (such as SSD).

In this embodiment, there may be three types of data based on the access characteristics of the data: non-hotspot data, read-intensive hotspot data and write-intensive hotspot data. The reclaim policy of the physical memory space may vary with different data types.

In this embodiment, the reclaiming process includes traversing the mapping entries in the metadata mapping table one by one to determine whether the memory space can be reclaimed. The following is an example of reclaiming the memory space of the physical PM. As shown in FIG. 7, the VMM performs the following steps of S701, S702, S703, S704, S705, S706 and S707.

At S701, the validity of the PM address in a mapping entry is determined. If the PM address is valid, a step of S702 is performed. If the PM address is invalid, the mapping entry is ignored and a step of S707 is performed.

At S702, whether the data in the memory space corresponding to the PM address are non-hotspot data is determined. If the data is non-hotspot data, a step of S705 is performed for reclaiming. If the data is hotspot data, a step of S703 is performed.

At S703, whether the data in the memory space corresponding to the PM address is read-intensive hotspot data is determined. If the data is read-intensive hotspot data, the step of S705 is performed for reclaiming. If the data is not read-intensive hotspot data, a step of S704 is performed.

At S704, whether the data in the memory space corresponding to the PM address are write-intensive hotspot data is determined. If the data is write-intensive hotspot data, the mapping entry is ignored and the step of S707 is performed.

In this example, since the write operations are performed in the physical PM, the elimination of write-intensive hotspot data should be avoided. It should be noted that, when sufficient available space cannot be reclaimed, a forced reclaiming operation is required to avoid the failure of subsequent new write operations. The forced reclaiming method may refer to the steps of S705 and S706. When the hotspot data identification algorithm fails to collect enough information about memory space that can be reclaimed, copying the data to the volatile memory may be considered while migrating the data to the NVM.

At S705, the NVM address is allocated to the virtual address of the mapping entry, and the data are copied to the NVM.

In this step, it is also possible to choose whether to copy data to the volatile memory at the same time based on the availability of the volatile memory and the data access characteristics, so as to reduce the probability of loading data from the NVM later, which, however, will not be limited in the present application.

At S706, the PM address mapped from the virtual address is deleted from the mapping entry (for example, the PM address mapped from the virtual address is set to be invalid) and the memory space of the physical PM is reclaimed.

At S707, the VMM continues to process a next mapping entry.

In some examples, in order to improve traversal efficiency, the mapping entries in the metadata mapping table may be pre-sorted according to the expected reclaim policy, or may be divided into a plurality of sub-tables based on different data access characteristics, which, however, will not be limited in the present application.

In some examples, the traversal operation may be terminated under preset conditions, such as having reclaimed sufficient idle memory space, or terminating after executing for more than a set amount of time, without completing the whole traversal process.

In some examples, only one of the steps of S702 and S703 may be performed according to the actual demand, or data of a set type are reclaimed by combined policies such as adjusting the order of the steps and performing the steps at different frequencies.

The reclaim policies of memory space described above are only some examples. In practical application, specific reclaim policy may be adopted according to the actual demand, which will not be limited in the present application.

According to the embodiments of the present application, the large-capacity PM is simulated by providing volatile memory (such as DRAM) and NVM (such as SSD) additionally as auxiliary devices. On the premise of maintaining the persistence of the virtual PM, the available memory capacity can be increased to meet the demand of multi-client sharing. Furthermore, according to the embodiments of the present application, the virtual PM capacity which is the sum of the memory capacity of the physical PM and that of the NVM (such as SSD), rather than the virtualized capacity of the physical PM, is provided, so as to achieve or exceed the performance of the physical PM at a lower hardware cost.

In addition, according to an embodiment of the present application, a computer-readable storage medium storing a computer program is provided. The computer program, when executed, performs the steps of the above method, such as the steps shown in FIG. 3.

According to the present application, large-capacity PM is virtualized with combined use of physical PM, NVM and volatile memory, so that the memory capacity of the virtual PM is no longer restricted by the memory capacity of the physical PM, and large-capacity virtual PM can be provided. According to the present application, the virtual PM with large capacity can be provided at a lower hardware cost without capacity restriction of the physical PM, and the performance index of the virtual PM is kept higher than or close to that of the physical PM, which better meets the demand of multi-tenant sharing in the cloud environment.

Those having ordinary skill in the art may understand that all or some of the steps, functional modules/units in the methods, systems and devices in the method disclosed above may be implemented as software, firmware, hardware and appropriate combinations thereof. In the embodiments by hardware, the division between functional modules/units mentioned in the above description does not necessarily correspond to the division of physical components. For example, a physical component may have a plurality of functions, or a function or step may be implemented cooperatively by several physical components. Some or all of the components may be implemented as software executed by a processor, such as a digital signal processor or a microprocessor, or as hardware, or as an integrated circuit, such as an application specific integrated circuit. Such software may be distributed on a computer-readable medium, which may include a computer memory medium (or a non-transient medium), and a communication medium (or a transient medium). It is well known to those having ordinary skill in the art that the computer storage medium includes volatile and nonvolatile, removable and non-removable media implemented in any method or technology for storing information, such as computer readable instructions, data structures, program modules or other data. The computer memory medium includes, without limitation, RAM, ROM, EEPROM, flash memory or other memory technologies, CD-ROM, digital versatile disk (DVD) or other optical disk storage, magnetic cartridges, magnetic tapes, disk storage or other magnetic storage devices, or any other media that may be adopted to store desired information and may be accessed by a computer. Furthermore, it is well known to those having ordinary skill in the art that the communication medium typically contains computer-readable instructions, data structures, program modules, or other data in modulated data signals such as carrier waves or other transmission mechanisms, and may include any information delivery media.

## Claims

1. A virtualization method of Persistent Memory (PM), comprising:
allocating a memory space to a virtual PM of a Virtual Machine (VM) based on a physical PM, a Non-Volatile Memory (NVM) and a volatile memory, wherein the NVM is configured to provide an extended memory space for the physical PM, and the volatile memory is configured to provide a data caching space for the physical PM and the NVM.

2. The method of claim 1, wherein allocating a memory space to a virtual PM of a Virtual Machine comprises allocating a memory space of the NVM to the virtual PM; and
the method further comprises: migrating data, which are stored in the physical PM and whose access characteristics meet a second condition, to a memory space mapped by the virtual PM in the NVM in response to an available memory capacity of the physical PM mapped by the virtual PM meeting a first condition.

3. The method of claim 1, wherein allocating a memory space to a virtual PM of a Virtual Machine comprises allocating a memory space of the volatile memory to the virtual PM; and
the method further comprises: identifying data, whose access characteristics meet a third condition, from data stored in the physical PM or the NVM mapped by the virtual PM, and caching the data, whose access characteristics meet the third condition, in a memory space mapped by the virtual PM in the volatile memory.

4. The method of any one of claims 1 to 3, after allocating a memory space to a virtual PM of a Virtual Machine, further comprising: recording or updating a virtual address of the virtual PM and a physical address mapped therefrom in a metadata mapping table, wherein the physical address includes a volatile memory address, an NVM address and a PM address.

5. The method of claim 4, wherein the metadata mapping table is cached in the memory space mapped by the virtual PM in the volatile memory; and a copy of the metadata mapping table is stored in a memory space mapped by the virtual PM in the physical PM.

6. The method of claim 4, wherein the method further comprises at least one of following:
searching, based on the virtual address accessed by a write request from the VM, the PM address mapped from the virtual address in the metadata mapping table to determine whether the PM address is valid or not; in response to the PM address mapped from the virtual address in the metadata mapping table being valid, writing data to be written in the valid PM address mapped from the virtual address; in response to the PM address mapped from the virtual address in the metadata mapping table being invalid, allocating the memory space of the physical PM, updating the valid PM address mapped from the virtual address in the metadata mapping table, and writing the data to be written in the updated PM address mapped from the virtual address; or
searching, based on the virtual address accessed by a read request from the VM, a first valid physical address mapped from the virtual address in the metadata mapping table in an order of the volatile memory address, the PM address to the NVM address, and reading data from the found first valid physical address mapped from the virtual address.

7. The method of claim 1, further comprising: reclaiming and reallocating a memory space of a physical memory medium based on an available memory capacity of the physical memory medium mapped by the virtual PM and access characteristics of the data, wherein the physical memory medium comprises at least one of the physical PM, the NVM or the volatile memory.

8. The method of claim 1 or 7, wherein the volatile memory comprises Dynamic Random Access Memory (DRAM) and the NVM comprises a Solid State Drive (SSD).

9. A virtualization system of Persistent Memory (PM), comprising: a physical host, physical PM, Non-Volatile Memory (NVM) and volatile memory, wherein a Virtual Machine Monitor (VMM) creating and operating Virtual Machine (VM) on the physical host is run on the physical host;
the VMM allocates memory space to virtual PM of the VMs based on the physical PM, the NVM and the volatile memory, wherein the NVM is configured to provide an extended memory space for the physical PM, and the volatile memory is configured to provide data caching space for the physical PM and the NVM.

10. A computer-readable storage medium storing a computer program, wherein the computer program, when executed, performs the steps of the virtualization method of any one of claims 1 to 8.
